(19) **Europäisches Patentamt European Patent Office Office européen des brevets**

(11) **EP 4 279 538 B1**

(12) **EUROPEAN PATENT SPECIFICATION**

(45) Date of publication and mention of the grant of the patent:
**02.10.2024 Bulletin 2024/40**

(21) Application number: **22173567.3**

(22) Date of filing: **16.05.2022**

(51) International Patent Classification (IPC):
**C08J 3/24** $^{(2006.01)}$    **C08L 23/12** $^{(2006.01)}$
**C08F 255/04** $^{(2006.01)}$    **C08J 11/10** $^{(2006.01)}$
**C08F 8/00** $^{(2006.01)}$

(52) Cooperative Patent Classification (CPC):
(C-Sets available)
**C08J 11/04; C08F 8/00; C08F 255/04; C08L 23/12;**
C08J 2300/30; C08J 2323/06; C08J 2323/12;
C08J 2323/14; C08J 2323/30; C08J 2400/30;
C08J 2423/06; C08J 2423/08; C08L 2207/20

(Cont.)

(54) **MODIFICATION PROCESS FOR POLYMER RECYCLATES**

**VERFAHREN ZUR MODIFIZIERUNG VON POLYMERREZYKLATEN**

**PROCÉDÉ DE MODIFICATION DES RECYCLATS DE POLYMÈRES**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.11.2023 Bulletin 2023/47**

(73) Proprietor: **Borealis AG**
**1020 Vienna (AT)**

(72) Inventors:
- **TOULOUPIDIS, Vasileios**
  **4021 Linz (AT)**
- **SOBCZAK, Lukas**
  **4021 Linz (AT)**
- **MUSTER, Udo**
  **4021 Linz (AT)**
- **TRAN, Tuan Anh**
  **4021 Linz (AT)**
- **DENIFL, Peter**
  **4021 Linz (AT)**
- **BRAUN, Hermann**
  **4021 Linz (AT)**
- **ALBRECHT, Andreas**
  **4021 Linz (AT)**
- **ABBASI, Mahdi**
  **4021 Linz (AT)**
- **BARROSO, Vitor**
  **7005-545 Évora (PT)**
- **KNOGLER, Bernhard**
  **4181 Oberneukirchen (AT)**
- **HOFSTADLER, Katrin**
  **4021 Linz (AT)**
- **GAHLEITNER, Markus**
  **4021 Linz (AT)**

(74) Representative: **Kador & Partner Part mbB**
**Corneliusstraße 15**
**80469 München (DE)**

(56) References cited:
EP-A1- 0 879 830    EP-A1- 2 679 630
EP-A1- 3 757 152    WO-A1-02/24803

(52) Cooperative Patent Classification (CPC): (Cont.)

C-Sets
**C08F 255/04, C08F 236/06;**
**C08L 23/12, C08L 23/06, C08K 5/14**

## Description

The present invention is directed to a process for modifying a post-consumer recycled polypropylene-based polyolefin composition. The present invention is also directed to a modified polyolefin composition obtained by the process, as well as to the use of the modified polyolefin composition in the manufacture of an article, and to a respective article.

## Background of the Invention

The challenge of disposal of accumulated plastic waste and corresponding environmental issues have received widespread attention from the public and professionals. Therefore, recycling of plastic material has become an important topic, where plastic waste can be turned into resources for new plastic products. Hence, environmental and economic aspects can be combined in recycling and reusing plastic material.

Although recycling of plastic material has already begun in the mid-90s by implementing collection systems, which allow more target orientated collection and separation of plastic materials from other household waste materials, the reuse of plastic material originating from plastic waste is still limited. The so-called post-consumer recycled (PCR) plastic material generally contains mixtures of different plastics and several contaminant materials. These mixtures usually need a pre-step of mechanical recycling (i.e. material sorting and cleaning) prior to further preparation methods. And still, many of the so-far employed methods are often limited to the use of relatively homogeneous plastic materials with a low content of contaminants. Moreover, they often do not provide recycled plastic materials with the necessary properties to be used in a wide range of applications.

Many processes for modification of post-consumer recycled plastic material are described in the art. For example, European patent application EP3757152A1 discloses a process for providing a controlled rheology modified mixed-plastic-polyethylene blend having a melt flow rate of 0.1 to 0.45 g/10 min (ISO 1133, 2.16 kg load, 190 °C) from a waste stream, wherein a mixed-plastic-polyethylene reactant blend is melt-blended with peroxide.

However, there is a general need for further modification methods of waste plastic materials, in particular, post-consumer recycled plastic material.

Polyolefins are the dominant plastic material in post-consumer recyclates. Thus, there is a strong need to provide modification methods for polyolefins from post-consumer recycled plastic materials. These methods should have high tolerance to the ratios of propylene polymers to ethylene polymers and should further be tolerant to the presence of non-polyolefin plastic materials and other contaminants present in the post-consumer recycled plastic materials.

For the reuse of recycled polyolefins, several properties are important. These properties particularly relate to rheological and mechanical characteristics of the polyolefins, which make them processable and applicable in the preparation of new articles. Thus, there is a particular need for modification methods of polyolefins resulting in polyolefins having these properties.

## Summary of the Invention

The objective of the present invention is to provide a process that addresses the above-described issues and to provide the respectively modified polyolefins. Accordingly, the present invention provides a process for modifying a post-consumer recycled polyolefin composition comprising the steps of

(A) providing a post-consumer recycled polyolefin composition having a starting melt flow rate $MFR_2$ (1), determined according to ISO 1133 at 2.16 kg load, 230 °C, in the range of from 1.0 to 100 g/10 min, and comprising, based on the total weight of the post-consumer recycled polyolefin composition, determined by FTIR spectroscopy,

(a) at least 50 wt.-% of one or more propylene (co)polymer component(s) and
(b) up to 50 wt.-% of one or more ethylene (co)polymer component(s);

(B) adding 0.10 to 1.50 wt.-%, based on the total weight of the post-consumer recycled polyolefin composition, of a radical initiator to the post-consumer recycled polyolefin composition and optionally mixing the components to form a mixture (1);
(C) adding 0.05 to 0.50 wt.-%, based on the total weight of the post-consumer recycled polyolefin composition, of a twofold unsaturated hydrocarbon compound having the general formula (1)

$$(1) \qquad CH_2=CH-(R)-CH=CH_2,$$

wherein R may be present or absent, and if being present, R is an aliphatic or aromatic hydrocarbon group comprising from 1 to 6 carbon atoms,
and mixing the components to form a mixture (2); and

(D) extruding the mixture (2) at a temperature in the range of from 180 to 300 °C to obtain a modified polyolefin composition having a final melt flow rate $MFR_2$ (2), determined according to ISO 1133 at 2.16 kg load, 230 °C;

wherein the ratio of $MFR_2$ (2) : $MFR_2$ (1) is below 1.00.

The present invention also provides a modified polyolefin composition obtained by the process, as well as the use of the modified polyolefin composition in the manufacture of an article, and a respective article.

**Short Description of the Figures**

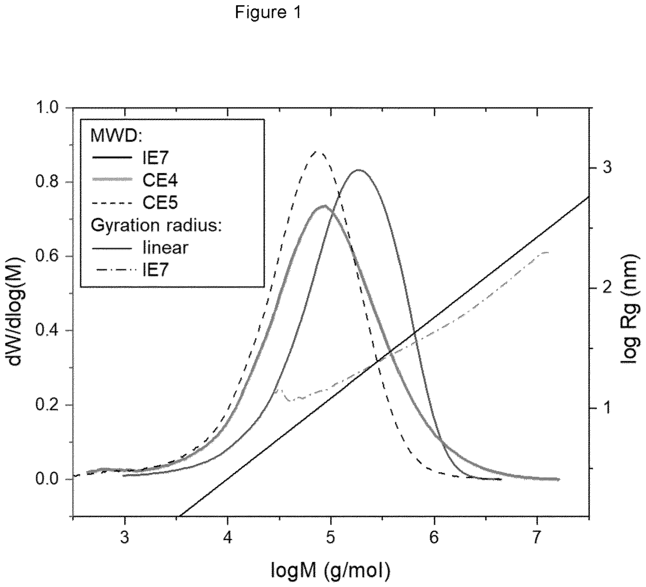

Figure 1 shows the molecular weight distribution (MWD, expressed as dW/dlog(M)) for inventive example IE7 and the two comparative examples CE4 and CE5, and the radius of gyration (expressed as log Rg) for inventive example IE7 in relation to the prediction for a fully linear polymer.

**Detailed Description of the Invention**

The present invention provides a process for modifying a post-consumer recycled polyolefin composition. This process employs a post-consumer recycled (PCR) polyolefin composition and introduces long chain branches into the polyolefin. The modified polyolefin composition is characterized by improved properties with regard to the processability and reuse of the polyolefin composition. The process reduces the melt flow rate of the polyolefin composition, enhances the weight average molecular weight (Mw) thereof and broadens the molecular weight distribution (MWD), increasing the polydispersity Mw/Mn. This makes the handling of the composition in the production of new products easier and improves the mechanical performance, like stiffness and toughness, of said products.

*Post-consumer recycled (PCR) polyolefin composition*

In step (A) of the process of the present invention, a post-consumer recycled polyolefin composition is provided.

According to the present invention, post-consumer recycled (PCR) polyolefin composition denotes a composition comprising polyolefins obtained from consumer waste. Thus, post-consumer recycled polyolefin has already completed at least a first use cycle (or life cycle), i.e. having already served their first purpose. Post-consumer recycled polyolefin is different from virgin polyolefin, i.e. a newly produced material, which has not already been recycled. Post-consumer recycled polyolefin is also different from industrial waste, i.e. manufacturing scrap, which does normally not reach a consumer.

Virgin materials and recycled materials can easily be differentiated based on the absence or presence of contaminants such as limonene, fatty acids, paper and/or wood and other contaminants, or generally on their ash content. Polyolefins (e.g. polypropylene-polyethylene blends) can further be differentiated with respect to the materials' origin by the possible presence of non-polyolefin polymers such as polystyrene and/or polyamide.

The process of the present invention is suitable for the use of compositions comprising a wide range of propylene polymer to ethylene polymer ratios. The post-consumer recycled polyolefin composition comprises, based on the total weight of the post-consumer recycled polyolefin composition, and determined by Fourier transform infrared (FTIR) spectroscopy,

(a) at least 50 wt.-% of one or more propylene (co)polymer component(s) and

(b) up to 50 wt.-% of one or more ethylene (co)polymer component(s).

Preferably, the one or more ethylene (co)polymer component(s) is/are present in the post-consumer recycled polyolefin composition in a content of at least 1 wt.-% (i.e. from 1 to 50 wt.-%), based on the total weight of the post-consumer recycled polyolefin composition, determined by FTIR spectroscopy.

The post-consumer recycled polyolefin composition preferably comprises a mixture (such as a polymer blend) of one or more propylene (co)polymer component(s) and one or more ethylene (co)polymer component(s).

As a direct determination of the propylene (co)polymer and ethylene (co)polymer content is not possible, the weight contents are determined from equivalent ratio from calibration by isotactic polypropylene (iPP) homopolymer and high density polyethylene (HDPE).

In one embodiment, the post-consumer recycled polyolefin composition comprises, based on the total weight of the post-consumer recycled polyolefin composition, determined by FTIR spectroscopy,

(a) from 50 to 98 wt.-%, preferably from 52 to 96 wt.-%, more preferably from 53 to 95 wt.-%, of one or more propylene (co)polymer component(s) and

(b) from 2 to 50 wt.-%, preferably from 4 to 48 wt.-%, more preferably from 5 to 47 wt.-%, of one or more ethylene (co)polymer component(s).

The (co)polymer components are preferably of high degree of crystallinity as defined below. However, less crystalline or non-crystalline copolymer components may additionally be present in the post-consumer recycled polyolefin composition.

Preferably, the post-consumer recycled polyolefin composition comprises a crystalline fraction (CF), determined according to CRYSTEX QC method, ISO 6427 Annex B, in an amount in the range of from 75 to 98 wt.-%, based on the total weight of the post-consumer recycled polyolefin composition. The less crystalline or non-crystalline copolymer components make up the majority of the soluble fraction (SF), determined according to CRYSTEX QC method, ISO 6427 Annex B, in an amount in the range of from 2 to 25 wt.-%, based on the total weight of the post-consumer recycled polyolefin composition.

The post-consumer recycled polyolefin composition may further comprise an ethylene content of the crystalline fraction (C2(CF)), determined according to FTIR during CRYSTEX analysis, in an amount in the range of from 3 to 60 wt.-%, preferably from 5 to 55 wt.-% and more preferably from 6 to 50 wt.-%, based on the total weight of the crystalline fraction of the post-consumer recycled polyolefin composition.

The post-consumer recycled polyolefin composition may also comprise an ethylene content of the soluble fraction (C2(SF)), determined according to FTIR during CRYSTEX analysis, in an amount in the range of from 20 to 50 wt.-%, preferably from 23 to 47 wt.-% and more preferably from 25 to 45 wt.-%, based on the total weight of the soluble fraction of the post-consumer recycled polyolefin composition.

*Propylene (co)polymer component*

According to the present invention, "propylene (co)polymer component" denotes a propylene homopolymer component and a propylene copolymer component as well as combinations, e.g. copolymers or blends, thereof.

The expression "propylene homopolymer" denotes a propylene polymer that consists of at least 99.0 wt.-%, preferably at least 99.5 wt.-%, more preferably at least 99.8 wt.-% of propylene monomer units, based on the total weight of the propylene polymer, determined by quantitative $^{13}C\{^1H\}$ nuclear magnetic resonanc (NMR) spectroscopy. In one embodiment, only propylene monomer units are detectable in the propylene homopolymer.

Based on its crystalline structure, a propylene homopolymer may be present as isotactic, syndiotactic or atactic propylene homopolymer.

Preferably, the propylene homopolymer has a high degree of crystallinity. Preferably, the propylene homopolymer is an isotactic propylene homopolymer, i.e. a propylene homopolymer that has an isotacticity, at the pentad level and reported as the percentage of isotactic pentad (mmmm) sequences with respect to all pentad sequences, of from 95 to 98 %, preferably from 95.5 to 98 % and more preferably from 96 to 97.5 %, determined by quantitative $^{13}C\{^1H\}$ NMR spectroscopy.

The expression "propylene copolymer" denotes a propylene polymer that generally comprises propylene monomer units and other comonomer units, preferably, ethylene comonomer units and/or one or more alpha-olefin(s) comonomer units having from 4 to 10 carbon atoms, most preferably ethylene comonomer units. Preferably, the content of the propylene monomer units in the propylene copolymer is at least 70 wt.-%, based on the total weight of the propylene copolymer, determined by quantitative $^{13}C\{^1H\}$-NMR spectroscopy, or alternatively 70 mol-%, based on the total molar content of the propylene copolymer, determined by quantitative $^{13}C\{^1H\}$-NMR spectroscopy.

Preferably, the propylene copolymer is an isotactic propylene copolymer, i.e. a propylene copolymer that has an isotacticity, at the pentad level and reported as the percentage of isotactic pentad (mmmm) sequences with respect to all pentad sequences, of from 95 to 98 %, preferably from 95.5 to 98 % and more preferably from 96 to 97.5 %, determined by quantitative $^{13}C\{^1H\}$-NMR spectroscopy.

In one embodiment of the present invention, the at least one propylene (co)polymer component(s) is an isotactic propylene homopolymer. In another embodiment of the present invention, the at least one of propylene (copolymer component(s) is an isotactic propylene copolymer of propylene and comonomer(s) selected from ethylene and/or one or more alpha-olefin(s) having from 4 to 10 carbon atoms, preferably ethylene, wherein the copolymer preferably contains, determined by quantitative $^{13}C\{^1H\}$-NMR spectroscopy, from 0.1 to 27 mol-%, more preferably from 0.1 to 20 mol-%, of comonomer(s).

*Ethylene (co)polymer component*

According to the present invention, ethylene (copolymer component denotes an ethylene homopolymer component and an ethylene copolymer component as well as combinations, e.g. copolymers or blends, thereof.

The expression "ethylene homopolymer" denotes an ethylene polymer that consists of at least 99.0 wt.-%, preferably at least 99.5 wt.-%, more preferably at least 99.8 wt.-% of ethylene monomer units, based on the total weight of the ethylene polymer, determined by quantitative $^{13}C\{^1H\}$-NMR spectroscopy. In one embodiment, only ethylene monomer units are detectable in the ethylene homopolymer.

The expression "ethylene copolymer" denotes an ethylene polymer that generally comprises ethylene monomer units and other comonomer units, preferably, one or more alpha-olefin(s) comonomer units having from 3 to 10 carbon atoms. Preferably, the content of the ethylene monomer units in the ethylene copolymer is at least 70 wt.-%, based on the total weight of the ethylene copolymer, determined by quantitative $^{13}C\{^1H\}$-NMR spectroscopy, or alternatively 75 mol-%, based on the total molar content of the an ethylene copolymer, determined by quantitative $^{13}C\{^1H\}$-NMR spectroscopy.

Preferably, the ethylene (co)polymer has a high degree of crystallinity of at least 40 %, determined by differential scanning calorimetry (DSC) and assuming a melting enthalpy of 293 J/g for fully crystalline ethylene polymer.

In one embodiment of the present invention, the at least one of ethylene (co)polymer component(s) is an ethylene homopolymer having a degree of crystallinity, determined by differential scanning calorimetry (DSC) and assuming a melting enthalpy of 293 J/g for fully crystalline ethylene polymer, of 40 to 90 %. In another embodiment of the present invention, the at least one of ethylene (copolymer component(s) is an ethylene copolymer of ethylene and comonomer(s) selected from one or more alpha-olefin(s) having from 3 to 10 carbon atoms, wherein the copolymer preferably contains, determined by quantitative $^{13}C\{^1H\}$-NMR spectroscopy, from 0.1 to 20 mol-%, more preferably from 0.1 to 15 mol-%, of comonomer(s), and having a degree of crystallinity, determined by differential scanning calorimetry (DSC) and assuming a melting enthalpy of 293 J/g for fully crystalline ethylene polymer, of 40 to 90 %.

*Further components*

Further, the post-consumer recycled polyolefin composition preferably comprises, based on the total weight of the post-consumer recycled polyolefin composition, one or more of

(c) from 0.1 to 100 ppm, preferably from 0.1 to 50 ppm, more preferably from 0.1 to 20 ppm, most preferably from 0.1 to 5 ppm, of limonene, determined by solid phase microextraction (HS-SPME-GC-MS);

(d) from 0.1 to 100 ppm, preferably from 0.1 to 50 ppm, more preferably from 0.1 to 20 ppm, most preferably from 0.1 to 5 ppm, of fatty acids, determined by solid phase microextraction (HS-SPME-GC-MS);

(e) from 0.1 to 10 wt.-%, preferably from 0.1 to 5 wt.-%, more preferably from 0.1 to 3 wt.-%, of non-polyolefin polymers; in particular, from 0.1 to 3 wt.-% of polystyrene and/or from 0.1 to 3 wt.-% of polyamide, determined by FTIR spectroscopy;

(f) from 0.1 to 10 wt.-%, preferably from 0.1 to 5 wt.-%, more preferably from 0.1 to 3 wt.-%, of other components, selected from talc, chalk, carbon, calcium stearate, titanium dioxide, pigments, metals, glass, paper, wood, and combinations thereof, determined as described below.

Preferably, the post-consumer recycled polyolefin composition comprises at least limonene in a content of at least 0.1 ppm.

It is preferred that the components a), b) and at least one of c) to e), preferably c), add up to 100 wt.-% of the post-consumer recycled polyolefin composition.

The post-consumer recycled polyolefin composition may also comprise a residual ash content, as determined according to the ISO 3451-1 (1997) standard, of below 3.0 wt.-%, preferably in the range of from 0.5 to 2.7 wt.-% and more preferably 0.7 to 2.5 wt.-%.

The process of the present invention is tolerant to the cited components in the indicated amounts, and the modified polyolefin composition obtained by the process is of excellent quality for further reuse.

According to the present invention, the post-consumer recycled polyolefin composition has a melt flow rate $MFR_2$ (1) (i.e. the starting melt flow rate in the beginning of the process), determined according to ISO 1133 at 2.16 kg load, 230 °C, in the range of from 1.0 to 100 g/10 min, preferably from 2.0 to 80 g/10 min, more preferably from 3.0 to 60 g/10 min.

The process of the present invention reduces the melt flow rate of the post-consumer recycled polyolefin composition, and makes the resultant modified polyolefin composition highly convenient in processing and suitable for reuse in a variety of polyolefin applications, resulting from an enhanced mechanical stability.

Preferably, the modified polyolefin composition has a second melt flow rate $MFR_2$ (2) (i.e. the final melt flow rate after application of the process), determined according to ISO 1133 at 2.16 kg load, 230 °C, in the range of from 0.1 to 50 g/10 min, more preferably from 0.1 to 40 g/10 min, most preferably from 0.1 to 30 g/10 min.

The ratio of $MFR_2$ (2) : $MFR_2$ (1) is below 1.00, preferably below 0.90. It is further preferred that the ratio of $MFR_2$ (2) : $MFR_2$ (1) is in the range of from 0.01 to 0.95, more preferably from 0.01 to 0.90.

The post-consumer recycled polyolefin composition may generally be present in form of particles, which are not limited by their geometry, as long as they contain enough surface for reaction in steps (B) and (C). However, preferably, the post-consumer recycled polyolefin composition is present in pellet form having a median thickness T50, determined by direct caliper measurement, in the range of from 0.5 to 5.0 mm, preferably in the range of from 0.8 to 3.5 mm. The pellets preferably are cylindrical or lens-shaped having a median diameter D50, determined by optical analysis using a high-speed camera, in the range of from 2.0 to 5.0 mm, preferably in the range of from 2.5 to 4.5 mm.

The post-consumer recycled polyolefin composition as required by the present invention may be prepared from pre-compositions based on post-consumer recyclates with other contents or forms. For example, post-consumer polymeric waste may be treated by different mechanical (e.g. sorting) processes, washing or chemical (e.g. dissolving) processes, in order to provide the post-consumer recycled polyolefin composition to be used in the process of the present invention.

In particular, the post-consumer recycled polyolefin composition may be provided in the desired size and form by extrusion at 180 to 300 °C, preferably from 200 to 280 °C, in a single- or twin-screw extruder, preferably a co-rotating twin-screw extruder, followed by a suitable pelletization process, in which the pellet thickness and diameter are defined. Suitable pelletization processes include underwater pelletization, water-ring pelletization and strand pelletization, the latter comprising solidification of one or more melt strands in a water bath followed by cutting the strand into pellets. In all cases, the pellet diameter is defined by the die diameter and the pellet length by the cutting frequency used in pelletization.

Generally, provision of the post-consumer recycled polyolefin composition in step (A) means that this composition is made available. The post-consumer recycled polyolefin composition may be provided by already placing the composition in a reactor, where the further components are added. However, the composition may also be added to a reactor concurrently to the addition of step (B).

*Radical initiator*

In step (B) of the process of the present invention, from 0.10 to 1.50 wt.-%, preferably from 0.15 to 1.20 wt.-%, more preferably 0.20 to 1.00 wt.-%, based on the total weight of the post-consumer recycled polyolefin composition, of a radical initiator are added to the post-consumer recycled polyolefin composition and, optionally, the components are mixed to form a mixture (1).

The radical initiator may be selected from any radical initiator suitable for a visbreaking reaction in propylene polymers. Preferably, the radical initiator is a carbon-carbon free radical compound, an azo compound, a stable nitroxyl compound, a sterically hindered NO-acyl compound or a peroxy compound. The peroxy compound is preferably selected from the group consisting of acyl peroxide, alkyl peroxide, hydroperoxide, perester, peroxycarbonate, and combinations thereof.

In a preferred embodiment, the radical initiator is tert-butylperoxy isopropyl carbonate.

The radical initiator is preferably added to the post-consumer recycled polyolefin composition as a liquid. As most of the radical initiators are solid compounds, they may be dissolved in a liquid prior to addition.

After addition of the radical initiator to the post-consumer recycled polyolefin composition, the components are preferably mixed to form a mixture (1), and preferably by contacting for a time of at least 2 minutes, preferably a time in the range of from 5 to 30 min, more preferably from 8 to 20 min, in order to reach relatively homogeneous absorption of the radical initiator by the post-consumer recycled polyolefin composition.

In a preferred embodiment, the addition of step (B) is performed in a flow-through reactor, such as a horizontal mixer with paddle stirrer, preferably in a continuous mode. The post-consumer recycled polyolefin and the radical initiator may be added in parallel streams into a flow-through reactor. Preferably, the flow-through reactor is a horizontal flow-through reactor, and the components may be transported through the reactor by means of transporting paddles. In this way, very efficient absorption of the radical initiator by the post-consumer recycled polyolefin is reached.

However, alternatively other reactors may be used, where, for example, the radical initiator is added to a reactor after the post-consumer recycled polyolefin composition has been placed therein.

Step (B) is preferably performed at a temperature in the range of from 20 to 90 °C, more preferably from 40 to 80 °C. It is essential that the process does not involve visbreaking, i.e. subjecting any intermediate product to reaction with the radical initiator in the absence of the twofold unsaturated hydrocarbon compound.

Step (C) is preferably performed subsequent to step (B). However, in one embodiment, steps (B) and (C) are carried out concurrently, by simultaneous addition of the radical initiator and the twofold unsaturated hydrocarbon compound (e.g. in a masterbatch). In this embodiment, only one mixture (mixture (2)) is formed.

*Twofold unsaturated hydrocarbon compound*

In step (C) of the process of the present invention, from 0.05 to 0.50 wt.-%, preferably from 0.08 to 0.45 wt.-%, more preferably from 0.10 to 0.40 wt.-%, based on the total weight of the post-consumer recycled polyolefin composition, of a twofold unsaturated hydrocarbon compound having the general formula (1) are added:

$$(1) \qquad CH_2=CH-(R)-CH=CH_2,$$

wherein R may be present or absent, and if being present, R is an aliphatic or aromatic hydrocarbon group comprising from 1 to 6 carbon atoms, and the components are mixed to form a mixture (2).

Formula (1) encompasses the formulas (1a) and (1b):

$$(1a) \qquad CH_2=CH-CH=CH_2$$

$$(1b) \qquad CH_2=CH-R-CH=CH_2,$$

wherein R in formula (1b) is an aliphatic or aromatic hydrocarbon group comprising from 1 to 6 carbon atoms.

In one preferred embodiment, the twofold unsaturated hydrocarbon compound of formula (1) is 1,3-butadiene (i.e. R is absent in formula (1)).

In other embodiments, the residue R in the twofold unsaturated hydrocarbon compound of formula (1) is selected from the group consisting of methylene, ethylene, propylene, n-butylene, tert-butylene, n-pentylene, i-pentylene, tert-pentylene, n-hexylene, tert-hexylene, i-hexylene, neo-hexylene and phenylene.

Preferably, the twofold unsaturated hydrocarbon compound may be added in its natural aggregate state at the addition temperature. Preferably, the twofold unsaturated hydrocarbon compound is added in form of a gas.

Mixing of the components is performed in order to reach good absorption of the unsaturated hydrocarbon compound and the radical initiator by the post-consumer recycled polyolefin composition. Mixing may be performed in any kind of reactor, preferably any reactor suitable for a solid-gas reaction. Mixing time is preferably in the range of from 1 s to 30 min, more preferably from 2 s to 5 min.

In a preferred embodiment, the reactor is a vertical flow-through reactor, wherein the particles of the post-consumer recycled polyolefin composition are transported via gravity. The unsaturated hydrocarbon compound is added to this reactor as a stream and mixing is performed during the fall motion of the post-consumer recycled polyolefin composition in the stream of the unsaturated hydrocarbon compound.

Step (C) is preferably performed at a temperature in the range of from 20 to 90 °C, more preferably from 40 to 80 °C.

Step (D) is performed subsequent to step (C).

In step (D) of the process of the present invention, the mixture (2) comprising the post-consumer recycled polyolefin composition, the radical initiator and the twofold unsaturated hydrocarbon compound is extruded at a temperature in the range of from 180 to 300 °C, preferably from 200 to 280 °C, to obtain a modified polyolefin composition.

Extrusion may be carried out in any conventional way known in the art. Preferably, extrusion is carried out in a continuous melt mixing device like a single screw extruder, a co-rotating twin screw extruder or a co-kneader. The barrel temperature is preferably in the range of from 200 to 280 °C. The screw speed of the melt mixing device preferably is adjusted to a range of from 100 to 750 rotations per minute (rpm).

More preferably, the melt mixing device includes a feed zone, a kneading zone and a die zone and a specific temperature profile is maintained along the screw of the melt-mixing device, having an initial temperature T1 in the feed zone, a maximum temperature T2 in the kneading zone and a final temperature T3 in the die zone, all temperatures being defined as barrel temperatures. Barrel temperature T1 (in the feed zone) is preferably in the range of from 180 to 260 °C. Barrel temperature T2 (in the kneading zone) preferably is in the range of from 260 to 300 °C. Barrel temperature T3 (in the die zone) preferably is in the range of from 220 to 280 °C.

In a preferred embodiment, the process of the present invention is performed as a continuous process under the use of the flow-through reactors described above, and with direct transport of the mixture (2) prepared in the step (C) into an extruder to prepare the modified polyolefin composition.

Subsequent to step (D), the modified polyolefin composition is preferably pelletized either in an underwater pelletizer or after solidification of one or more strands in a suitable pelletization process. Suitable pelletization processes include underwater pelletization, water-ring pelletization and strand pelletization, the latter comprising solidification of one or more melt strands in a water bath followed by cutting the strand into pellets.

Having a low content of cross-linked or gel-like fraction, commonly expressed by the xylene hot insoluble (XHU) fraction, is advantageous for many applications, particularly films or coatings, in which a low xylene hot insoluble (XHU) fraction enables good surface quality. The process of the present invention is preferably characterized by providing a ratio of the amount of the xylene hot insoluble (XHU) fraction of the modified polyolefin composition to the amount of the xylene hot insoluble (XHU) fraction of the post-consumer recycled polyolefin composition, determined according to EN 579, of below 2.5, preferably in the range of from 0.1 to 2.4, more preferably from 0.2 to 2.3.

Having a relatively high crystallization temperature Tc is advantageous for many conversion processes, particularly injection molding and blow molding, in which a high crystallization temperature Tc allows a reduction of cycle time. The process of the present invention is preferably characterized by enhancing the crystallization temperature Tc of the propylene polymer content in the polyolefin. Preferably, the difference of the crystallization temperature Tc of the propylene polymer content of the modified polyolefin composition to the crystallization temperature Tc of the post-consumer recycled polyolefin composition, determined according to ISO 11357-3, is more than 0 °C, preferably in the range of from 1 to 10 °C, more preferably from 1.5 to 6 °C.

*Further additives*

During the process, further additives may be added to the mixture. In particular, common additives for preparation processes of polyolefins, such as modifiers, stabilizers, antistatic agents, lubricants, nucleating agents, foam nucleators, acid scavengers, UV stabilizers, slip agents and pigments, as well as fillers and reinforcement agents may be added. The advantage of the post-consumer recycled polyolefin composition is that it usually contains additives from the preparation processes of virgin polymers and first-use articles, meaning that the further addition of additives may not be required at all. If, however, especially stabilizers like primary and secondary antioxidants have been consumed during the processing and usage phase, addition of stabilizers in suitable amounts is preferred.

*Modified polyolefin composition*

The present invention is also directed to the modified polyolefin composition obtained by the process of the present invention in any of the above-described embodiments.

The modified polyolefin composition has been changed in its properties by the controlled introduction of long chain branching by the process of the present invention. Excellent results in terms of processability and further application options were obtained for post-consumer recycled polyolefin compositions with different ratios of propylene polymers to ethylene polymers. This was unexpected as reaction with radical initiators leads to different mechanism of action in propylene polymers versus ethylene polymers. While visbreaking occurs in propylene polymers, ethylene polymers normally form highly crosslinked structures upon reaction with a radical initiator.

The process of the present invention turns this problem into a possible advantage by combining the chain fracture in the propylene polymers with the branching and crosslinking reactions in ethylene polymers and involving some cross-polymer reactions leading to improved compatibility.

The modified polyolefin composition is preferably characterized by a second melt flow rate $MFR_2$ (2) (i.e. the final melt flow rate after application of the process), determined according to ISO 1133 at 2.16 kg load, 230 °C, in the range of from 0.1 to 50 g/10 min, more preferably from 0.1 to 40 g/10 min, most preferably from 0.1 to 30 g/10 min.

Another method of characterizing the structure of branched polypropylene is the Rheotens measurement. Branched polypropylene shows higher melt strength with increasing shear applied on the polymer such as during melt extrusion. This property is well-known as strain hardening. In the Rheotens test, the strain hardening behavior of polymers is analyzed by Rheotens apparatus (product of Göttfert, Siemensstr. 2, 74711 Buchen, Germany) in which a melt strand is elongated by drawing down with a defined acceleration. The haul-off force F in dependence of draw-down velocity v is recorded. The test procedure is performed at a temperature of 23 °C. Further details are given in the experimental part.

The modified polyolefin composition is preferably characterized by an $F_{30}$ melt strength, determined according to Rheotens method, ISO 16790:2005, in the range of from 3.5 to 30.0 cN, more preferably from 4.0 to 25.0 cN and most preferably from 4.5 to 22.0 cN.

The modified polyolefin composition is preferably characterized by a $v_{30}$ melt extensibility, determined according to Rheotens method, ISO 16790:2005, in the range of from 150 to 300 mm/s, more preferably from 155 to 290 mm/s and most preferably from 160 to 280 mm/s.

As the parameters $F_{30}$ melt strength and $v_{30}$ melt extensibility are dependent on the melt flow rate, the modified polyolefin composition is preferably characterized by an $F_{30}/MFR_2$ (2) value of at least 0.5 cN 10 min/g, more preferably at least 2.0 cN.10 min/g, and/or a value in the range of from 0.5 to 80.0 cN.10 min/g, more preferably from 2.0 to 80.0 cN·10 min/g; and/or a $v_{30}/MFR_2$ (2) value of at least 20 mm·600/g, more preferably 50 mm·600/g, and/or a value in the range of from 20 to 1200 mm·600/g, more preferably from 50 to 1200 mm·600/g.

The modified polyolefin composition is preferably characterized by a xylene hot insoluble (XHU) fraction, determined according to EN 579, in an amount in the range of from 0.0 to 3.5 wt.-%, more preferably from 0.1 to 3.0 wt.-% and most preferably from 0.1 to 2.5 wt.-%, based on the total weight of the modified polyolefin composition.

The modified polyolefin composition is preferably characterized by a broad molecular weight distribution (MWD), determined according to the GPC method and expressed by the ratio between weight average molecular weight (Mw) and number average molecular weight (Mn). Said ratio Mw/Mn, also called polydispersity, is in the range of from 5 to 15, more preferably from 6 to 14 and most preferably from 7 to 13. The ratio Mw/Mn of the modified polyolefin composition is preferably higher than the ratio Mw/Mn of the PCR polyolefin composition.

The modified polyolefin composition is preferably characterized by a strain hardening factor (SHF), determined at a strain rate of $1\ s^{-1}$ and a Hencky strain of 2.5 and 180 °C as described below, in the range of from 2.0 to 20.0, more preferably from 2.2 to 15.0 and most preferably from 2.3 to 12.5.

Due to its dependency of the melt flow rate, the strain hardening factor may be defined as $SHF/MFR_2$. Thus, the modified polyolefin composition is preferably characterized by an $SHF/MFR_2$ (2) value of at least 0.5 $(g/10°min)^{-1}$, more preferably at least 1.2 $(g/10°min)^{-1}$, and/or a value in the range of from 0.5 to 40.0 $(g/10°min)^{-1}$, more preferably from 1.2 to 30.0 $(g/10°min)^{-1}$.

*Use and articles*

The present invention is also directed to the use of the modified polyolefin composition in any of the above-described embodiments and prepared by the process of the present invention in the manufacture of an article, as well as to the article.

The article is preferably a foamed article, a film or an extrusion coating. In preferred embodiments, the article is a foamed article, a film or an extrusion coating, and comprises more than 50 wt.-%, preferably more than 75 wt.-%, such as 90 wt.-%, of the modified polyolefin composition, based on the total weight of the article.

In a particularly preferred embodiment, the article is a foamed article comprising more than 50 wt.-%, preferably more than 75 wt.-%, such as 90 wt.-%, of the modified polyolefin composition, based on the total weight of the foamed article, and the modified polyolefin composition having an $MFR_2$, determined according to ISO 1133 at 2.16 kg load, 230 °C, in the range of from 0.1 to 1.5 g/10 min.

In a further particularly preferred embodiment, the article is a film or an extrusion coating, preferably for substrates such as paper, metal, woven or non-woven textiles, comprising more than 50 wt.-%, preferably more than 75 wt.-%, such as 90 wt.-%, of the modified polyolefin composition, based on the total weight of the film or extrusion coating, respectively, and the modified polyolefin composition having an $MFR_2$, determined according to ISO 1133 at 2.16 kg load, 230 °C, in the range of from 1.5 to 10.0 g/10 min.

**Examples**

Measurement methods

The following definitions of terms and determination methods apply for the above general description of the invention as well as to the below examples, unless otherwise defined.

*Melt Flow Rate*

The melt flow rate (MFR) was determined according to ISO 1133 and is indicated in g/10 min. The MFR is an indication of the flowability and hence the processability of the polymer. The higher the melt flow rate, the lower the viscosity of the polymer. Here, the $MFR_2$ was determined at a temperature of 230 °C and under a load of 2.16 kg.

$F_{30}$ *melt strength and* $v_{30}$ *melt extensibility*

The test described herein follows ISO 16790:2005. The strain hardening behavior was determined by the method as described in the article "Rheotens-Master-curves and Drawability of Polymer Melts", M. H. Wagner, Polymer Engineering and Science, Vol. 36, pages 925 to 935. The strain hardening behavior of polymers was analyzed with a Rheotens apparatus (product of Gottfert, Siemensstr.2, 74711 Buchen, Germany) in which a melt strand is elongated by drawing down with a defined acceleration. The Rheotens experiment simulates industrial spinning and extrusion processes. In principle a melt is pressed or extruded through a round die and the resulting strand is hauled off. The stress on the extrudate is recorded as a function of melt properties and measuring parameters (especially the ratio between output and haul-off speed, practically a measure for the extension rate).

For the results presented below, the materials were extruded with a lab extruder HAAKE Polylab system and a gear pump with cylindrical die (LID = 6.0/2.0 mm). The gear pump was pre-adjusted to a strand extrusion rate of 5 mm/s, and the melt temperature was set to 200 °C. The spinline length between die and Rheotens wheels was 80 mm. At the beginning of the experiment, the take-up speed of the Rheotens wheels was adjusted to the velocity of the extruded polymer strand (tensile force zero). Then the experiment was started by slowly increasing the take-up speed of the Rheotens wheels until the polymer filament breaks. The acceleration of the wheels was small enough so that the tensile force was measured under quasi-steady conditions. The acceleration of the melt strand drawn down is 120 mm/s². The Rheotens was operated in combination with the PC program EXTENS. This is a real-time data-acquisition program, which displays and stores the measured data of tensile force and drawdown speed. The end points of the Rheotens curve (force versus pulley rotary speed) is taken as the $F_{30}$ melt strength and drawability values.

*Strain hardening factor (SHF)*

The strain hardening factor is defined as

$$SHF = \frac{\eta_E^+(t,\dot{\varepsilon})}{\eta_{LVE}^+(t)} = \frac{\eta_E^+(t,\dot{\varepsilon})}{3\eta^+(t)}$$

wherein $\eta_E^+(t,\dot{\varepsilon})$ is the uniaxial extensional viscosity; and $\eta_{LVE}^+(t)$ is three times the time dependent shear viscosity $\eta^+(t)$ in the linear range of deformation.

The determination of the linear viscoelastic envelope in extension $\eta_{LVE}^+(t)$, using IRIS Rheo Hub 2008, required the calculation of the discrete relaxation time spectrum from the storage and loss modulus data (G', G" (ω)). The linear viscoelastic data (G', G" (ω)) is obtained by frequency sweep measurements undertaken at 180 °C on a Anton Paar MCR 300 coupled with 25 mm parallel plates. The underlying calculation principles used for the determination of the discrete relaxation spectrum are described in Baumgärtel M, Winter HH, "Determination of the discrete relaxation and retardation time spectra from dynamic mechanical data", Rheol.Acta 28:511519 (1989). IRIS RheoHub 2008 expresses the relaxation time spectrum as a sum of N Maxwell modes

$$\overset{o}{G}(t) = G_e \cdot \sum_1^N g_i \cdot e^{-\frac{t}{\lambda_i}}$$

wherein $g_i$ and $\lambda_i$ are material parameters and $G_e$ is the equilibrium modulus.
The choice for the maximum number of modes, N used for determination of the discrete relaxation spectrum, is done by using the option "optimum" from IRIS RheoHub 2008. The equilibrium modulus $G_e$ was set at zero. The non-linear fitting used to obtain $\eta_{LVE}^+(t)$ is performed on IRIS Rheo Hub 2008, using the Doi-Edwards model.

The uniaxial extensional viscosity, $\eta_E^+(t,\dot{\varepsilon})$ is obtained from uniaxial extensional flow measurements, conducted on an Anton Paar MCR 501 coupled with the Sentmanat extensional fixture (SER-1). The temperature for the uniaxial extensional flow measurements was set at 180 °C, applying extension (strain) rates $\partial\varepsilon/\partial t$ ranging from 0.3 s⁻¹ to 10 s⁻¹ and covering a range of Hencky strain

$$\varepsilon = ln\ [(l - l_0)\ /\ l_0],$$

with $l_0$ being the original and I the actual sample fixation length, from 0.3 to 3.0. Particularly care was taken for the preparation of the samples for extensional flow. The samples were prepared by compression moulding at 230 °C followed by slow cooling to room temperature (forced water or air cooling were not used). This procedure allowed obtaining well shaped samples free of residual stresses. The sample was left for some minutes at the testing temperature to ensure thermal stability (set temperature ±0,1 °C), before carrying out the uniaxial extensional flow measurements.

The strain hardening factor (SHF) was determined at 180 °C at a strain rate of 1 s$^{-1}$ and a Hencky strain of 2.5.

*XHU fraction*

The xylene hot insoluble (XHU) fraction was determined according to EN 579. About 2.0 g of the polymer ($m_p$) was weighted and put in a mesh of metal which was weighted, the total weight being represented by ($m_{p+m}$). The polymer in the mesh was extracted in a soxhlet apparatus with boiling xylene for 5 hours. The eluent was then replaced by fresh xylene and boiling was continued for another hour. Subsequently, the mesh was dried and weighted again ($m_{XHU+m}$). The mass of the xylene hot insoluble ($m_{XHU}$) obtained by the formula $m_{XHU+m}$-$m_m$=$m_{XHU}$ was put in relation to the weight of the polymer ($m_p$) to obtain the fraction of xylene insolubles $m_{XHU}/m_p$.

*Pellet dimensions*

The average pellet dimensions of the PCR polyolefin composition were determined by two methods applied for thickness and diameter respectively. Median pellet thickness, T50, is calculated from manually measuring the thickness of 10 pellets with a standardized caliper. Median pellet diameter, D50, is determined by optical measurement on pellets with a high-speed CCD camera, type PS25C of OCS GmbH, Germany.

*Isotacticity and comonomer content of polypropylene*

Quantitative nuclear-magnetic resonance (NMR) spectroscopy was used to quantify the isotacticity and comonomer content of the propylene (co)polymer component.

Quantitative $^{13}$C{$^1$H} NMR spectra were recorded in the solution-state using a Bruker Advance III 400 NMR spectrometer operating at 400.15 and 100.62 MHz for $^1$H and $^{13}$C respectively. All spectra were recorded using a $^{13}$C optimised 10 mm extended temperature probehead at 125°C using nitrogen gas for all pneumatics.

Approximately 200 mg of material was dissolved in *1,2*-tetrachloroethane-$d_2$ (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bilevel WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}$C{$^1$H} NMR spectra were processed, integrated and relevant quantitative properties determined from the integrals using proprietary computer programs.

All chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

Specifically the influence of regio-defects and comonomer on the quantification of the tacticity distribution was corrected for by subtraction of representative regio-defect and comonomer integrals from the specific integral regions of the stereo sequences.

The isotacticity was determined at the pentad level and reported as the percentage of isotactic pentad (mmmm) sequences with respect to all pentad sequences:

$$[mmmm] \% = 100 * (mmmm / \text{sum of all pentads})$$

The comonomer fraction was quantified using the method of Wang et al. (Wang, W-J., Zhu, S., Macromolecules 33 (2000), 1157) through integration of multiple signals across the whole spectral region in the $^{13}$C{$^1$H} spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S_{\beta\beta} + S_{\beta\gamma} + S_{\beta\delta} + 0.5(S_{\alpha\beta} + S_{\alpha\gamma}))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [\text{mol-\%}] = 100 * f_E$$

The weight percent comonomer incorporation was calculated from the mole fraction:

$$E\ [\text{wt.-\%}] = 100 * (f_E * 28.06)\ /\ ((f_E * 28.06) + ((1-f_E) * 42.08))$$

*Molecular weight averages, molecular weight distribution*

Molar mass averages (Mw and Mn) and polydispersity Mw/Mn, were determined by Gel Permeation Chromatography (GPC) according to ISO 16014-4:2003 and ASTM D 6474-99 using the following formulas:

$$M_n = \frac{\sum_{i=1}^{N} A_i}{\sum (A_i/M_i)}$$

$$M_w = \frac{\sum_{i=1}^{N} (A_i\ x\ M_i)}{\sum A_i}$$

where Ai and Mi are the chromatographic peak slice area and polyolefin molecular weight (MW).

A PolymerChar GPC instrument, equipped with infrared (IR) detector was used with 3 x Olexis and 1x Olexis Guard columns from Polymer Laboratories and 1,2,4-trichlorobenzene (TCB, stabilized with 250 mg/l 2,6-Di-tert-butyl-4-methylphenol) as solvent at 160 °C and at a constant flow rate of 1 ml/min. 200 $\mu$L of sample solution were injected per analysis. The column set was calibrated using universal calibration (according to ISO 16014-2:2003) with at least 15 narrow MWD polystyrene (PS) standards in the range of 0.5 kg/mol to 11500 kg/mol. Mark Houwink constants used for PS, PE and PP are as described per ASTM D 6474-99. All samples were prepared by dissolving 5.0 to 9.0 mg of polymer in 8 ml (at 160 °C) of stabilized TCB (same as mobile phase) for 2.5 hours at 160 °C under continuous gentle shaking in the autosampler of the GPC instrument.

*Crystex analysis, crystalline fraction (CF) and soluble fraction (SF)*

The crystalline (CF) and soluble fractions (SF) of the PCR polyolefin composition as well as the ethylene content and intrinsic viscosities of the respective fractions were analyzed by use of the CRYSTEX instrument, Polymer Char (Valencia, Spain) in line with ISO 6427 Annex B. Details of the technique and the method can be found in literature (Ljiljana Jeremic, Andreas Albrecht, Martina Sandholzer & Markus Gahleitner (2020) Rapid characterization of high-impact ethylene-propylene copolymer composition by crystallization extraction separation: comparability to standard separation methods, International Journal of Polymer Analysis and Characterization, 25:8, 581-596).

The crystalline and amorphous fractions are separated through temperature cycles of dissolution at 160 °C, crystallization at 40 °C and re-dissolution in 1,2,4-trichlorobenzene at 160 °C. Quantification of SF and CF and determination of ethylene content (C2) are achieved by means of an integrated infrared detector (IR4) and for the determination of the intrinsic viscosity (IV) an online 2-capillary viscometer is used.

The IR4 detector is a multiple wavelength detector measuring IR absorbance at two different bands ($CH_3$ stretching vibration (centred at app. 2960 $cm^{-1}$) and the CH stretching vibration (2700-3000 $cm^{-1}$) that are serving for the determination of the concentration and the ethylene content in ethylene-propylene copolymers. The IR4 detector is calibrated with series of 8 EP copolymers with known ethylene content in the range of 2 wt.-% to 69 wt.-% (determined by $^{13}$C-NMR) and each at various concentrations, in the range of 2 and 13 mg/ml. To encounter for both features, concentration and ethylene content at the same time for various polymer concentrations expected during Crystex analyses the following calibration equations were applied:

$$Conc = a + b*Abs(CH) + c*(Abs(CH))^2 + d*Abs(CH_3) + e*(Abs(CH_3)^2 + f*Abs(CH)*Abs(CH3)$$

$$CH_3/1000C = a + b*Abs(CH) + c*Abs(CH_3) + d*(Abs(CH_3)/Abs(CH)) + e* (Abs(CH_3)/Abs(CH))^2$$

The constants a to e for equation 1 and a to f for equation 2 were determined by using least square regression analysis.

The $CH_3/1000C$ is converted to the ethylene content in wt.-% using following relationship:

$$Wt.\text{-}\% \text{ (ethylene in EP copolymers)} = 100 - CH_3/1000TC * 0.3$$

Intrinsic viscosity (IV) of the PCR polyolefin composition and its soluble and crystalline fractions are determined with a use of an online 2-capillary viscometer and are correlated to corresponding IV's determined by standard method in decalin according to ISO 1628-3. Calibration is achieved with various EP PP copolymers with IV = 2-4 dL/g. The determined calibration curve is linear:

$$IV \text{ (dL/g)} = a* Vsp/c$$

The samples to be analyzed are weighed out in concentrations of 10 mg/ml to 20 mg/ml. To avoid injecting possible gels and/or polymers which do not dissolve in TCB at 160 °C, like PET and PA, the weighed out sample was packed into a stainless steel mesh MW 0,077/D 0,05 mm.

After automated filling of the vial with 1,2,4-TCB containing 250 mg/l 2,6-tert-butyl-4-methylphenol (BHT) as antioxidant, the sample is dissolved at 160 °C until complete dissolution is achieved, usually for 60 min, with constant stirring of 400 rpm. To avoid sample degradation, the polymer solution is blanketed with the $N_2$ atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the IV [dl/g] and the $C_2$ [wt.-%] of the PP composition. During the second injection the soluble fraction (at low temperature) and the crystalline fraction (at high temperature) with the crystallization cycle are measured (wt.-% SF, wt.-% $C_2$, IV).

*DSC analysis, crystallization temperature (Tc) and degree of crystallinity*

Differential scanning calorimetry (DSC) was used to determine the degree of crystallinity of the ethylene polymer and the crystallization temperature Tc of the polyolefin composition. DSC parameters were measured with a TA Instrument Q200 differential scanning calorimetry (DSC) on 5 to 7 mg samples. DSC was run according to ISO 11357 / part 3 / method C2 in a heat / cool / heat cycle with a scan rate of 10 °C/min in the temperature range of -30 to +225 °C. The crystallization temperature (Tc) was determined from the cooling step, while melting temperature (Tm) and melting enthalpy (Hm) were determined from the second heating step. The crystallinity was calculated from the melting enthalpy by assuming an Hm-value of 209 J/g for a fully crystalline polypropylene resp. 293 J/g for a fully crystalline polyethylene (see Brandrup, J., Immergut, E. H., Eds. Polymer Handbook, 3rd ed. Wiley, New York, 1989; Chapter 3).

*PCR polyolefin composition: Amount of propylene (co)polymer, ethylene (co)polymer, polystyrene, and polyamide-6*

To establish different calibration curves different standards, first iPP and HDPE and second iPP, PS and PA6 were blended in relevant fractions. For the quantification of the content of the foreign polymers, IR spectra were recorded in the solid-state using a Bruker Vertex 70 FTIR spectrometer. Films were prepared with a compression-molding device at 190 °C with 4 - 6 MPa clamping force. The thickness of the films for the calibration standards for iPP and HDPE was 300 $\mu$m and for the quantification of the iPP, PS and PA 6 50-100 $\mu$m film thickness was used. Standard transmission FTIR spectroscopy is employed using a spectral range of 4000-400 cm$^{-1}$, an aperture of 6 mm, a spectral resolution of 2 cm$^{-1}$, 16 background scans, 16 spectrum scans, an interferogram zero filling factor of 32 and Norton Beer strong apodization.

The absorption of the band at 1167 cm$^{-1}$ in iPP is measured and the iPP content is quantified according to a calibration curve (absorption/thickness in cm versus iPP content in wt.-%).

The absorption of the band at 1601 cm$^{-1}$ (PS) and 3300 cm$^{-1}$ (PA6) are measured and the PS and PA6 content quantified according to the calibration curve (absorption/thickness in cm versus PS and PA content in wt.-%). The content of polyethylene and ethylene containing copolymers is obtained by subtracting (iPP+PS+PA6) from 100, taking into account the content of non-polymeric impurities as determined in the methods below. The analysis is performed as a double determination.

*PCR polyolefin composition: Talc and chalk content*

Thermogravimetric Analysis (TGA) experiments were performed with a Perkin Elmer TGA 8000 in line with ISO 3451-1 (1997). Approximately 10-20 mg of material was placed in a platinum pan. The temperature was equilibrated at 50 °C for 10 minutes, and afterwards raised to 950 °C under nitrogen at a heating rate of 20 °C/min. The weight loss between ca. 550 °C and 700 °C ($WCO_2$) was assigned to $CO_2$ evolving from CaCOs, and therefore the chalk content was evaluated as:

$$\text{Chalk content} = 100/44 \times WCO_2$$

Afterwards the temperature was lowered to 300°C at a cooling rate of 20 °C/min. Then the gas was switched to oxygen, and the temperature was raised again to 900 °C. The weight loss in this step was assigned to carbon black (Wcb). Knowing the content of carbon black and chalk, the ash content excluding chalk and carbon black was calculated as:

$$\text{Ash content} = (\text{Ash residue}) - 56/44 \times WCO_2 - Wcb$$

where Ash residue is the wt.-% measured at 900 °C in the first step conducted under nitrogen. The ash content is estimated to be the same as the talc content for the investigated recyclates.

*PCR polyolefin composition: Amount of Metals*

The metal amount was determined by X-ray fluorescence (XRF).

*PCR polyolefin composition: Amount of Paper and Wood*

Paper and wood amounts were determined by conventional laboratory methods including milling, floatation, microscopy and Thermogravimetric Analysis (TGA).

*PCR polyolefin composition: Limonene measurement*

Limonene quantification was carried out using solid phase micro-extraction (HS-SPME-GC-MS) by standard addition.

50 mg ground samples were weighed into 20 mL headspace vials and after the addition of limonene in different concentrations and a glass-coated magnetic stir bar. The vial was closed with a magnetic cap lined with silicone/PTFE. Micro capillaries (10 pL) were used to add diluted limonene standards of known concentrations to the sample. Addition of 0, 2, 20 and 100 ng equals 0 mg/kg, 0.1 mg/kg, 1 mg/kg and 5 mg/kg limonene, in addition standard amounts of 6.6 mg/kg, 11 mg/kg and 16.5 mg/kg limonene were used in combination with some of the samples tested in this application. For quantification, ion 93 acquired in SIM mode was used. Enrichment of the volatile fraction was carried out by headspace solid phase micro-extraction with a 2 cm stable flex 50/30 pm DVB/Carboxen/PDMS fibre at 60 °C for 20 minutes. Desorption was carried out directly in the heated injection port of a GCMS system at 270 °C.

GCMS Parameters:

Column: 30 m HP 5 MS 0.25*0.25
Injector: Splitless with 0.75 mm SPME Liner, 270 °C
Temperature program: -10°C (1 min)
Carrier gas: Helium 5.0, 31 cm/s linear velocity, constant flow
MS: Single quadrupole, direct interface, 280 °C interface temperature
Acquisition: SIM scan mode
Scan parameter: 20-300 amu
SIM Parameter: m/Z 93, 100 ms dwell time

*PCR polyolefin composition: Total free fatty acid content*

Fatty acid quantification was carried out using headspace solid phase micro extraction (HS-SPME-GC-MS) by standard addition.
50 mg ground samples were weighed in 20 mL headspace vial and after the addition of limonene in different concentrations and a glass-coated magnetic stir bar the vial was closed with a magnetic cap lined with silicone/PTFE. 10 $\mu$L Micro-capillaries were used to add diluted free fatty acid mix (acetic acid, propionic acid, butyric acid, pentanoic acid, hexanoic acid and octanoic acid) standards of known concentrations to the sample at three different levels. Addition of 0, 50, 100 and 500 ng equals 0 mg/kg, 1 mg/kg, 2 mg/kg and 10 mg/kg of each individual acid. For quantification ion 60 acquired in SIM mode was used for all acids except propanoic acid, here ion 74 was used.

GCMS Parameter:

Column: 20 m ZB Wax plus 0.25*0.25
Injector: Split 5:1 with glass lined split liner, 250 °C
Temperature program: 40°C (1 min) @6 °C/min to 120 °C, @15 °C to 245 °C (5 min)
Carrier: Helium 5.0, 40 cm/s linear velocity, constant flow
MS: Single quadrupole, direct interface, 220°C inter face temperature
Acquisition: SIM scan mode
Scan parameter: 46-250 amu 6.6 scans/s
SIM Parameter: m/z 60,74, 6.6 scans/s

Experimental

Seven inventive examples (IE1 to IE7) and seven comparative examples (CE1 to CE7) were prepared, wherein the comparative examples CE1 to CE4 neither contained the radical initiator nor the twofold unsaturated hydrocarbon compound, while the comparative examples CE5 to CE7 contained only the radical initiator and no twofold unsaturated hydrocarbon compound. Properies of the used PCR polyolefin compositions are indicated in Table 1 below.

**Table 1:** Properties of PCR polyolefin compositions used in the examples.

| PCR Properties | PCR1 | PCR mix* | PCR2 | PCR3 |
|---|---|---|---|---|
| Example | IE1/IE2/CE1 | IE3/IE4/CE2 | IE5/IE6/CE3 | IE7/CE4-CE7 |
| PP, wt.-% | 55 | 72.5 | 90 | 90 |
| PE, wt.-% | 45 | 27.5 | 10 | 10 |
| SF, wt.-% | 9 | 9.3 | 9.7 | 14 |
| CF, wt.-% | 91 | 90.7 | 90.3 | 86 |
| C2(SF), wt.-% | 43 | 36 | 29 | 31 |
| C2(CF), wt.-% | 47 | 28 | 8 | 9 |

(continued)

| PCR Properties | PCR1 | PCR mix* | PCR2 | PCR3 |
|---|---|---|---|---|
| Example | IE1/IE2/CE1 | IE3/IE4/CE2 | IE5/IE6/CE3 | IE7/CE4-CE7 |
| IV(SF), dl/g | 1.4 | 1.3 | 1.2 | 1.3 |
| IV(CF), dl/g | 1.8 | 1.7 | 1.6 | 1.4 |
| $MFR_2$, g/10 min | 5.0 | 8.3 | 13.7 | 25.1 |
| XHU, wt.-% | 0.97 | 0.66 | 0.51 | 0.60 |
| Tc(PP), °C | 122 | 124 | 124 | 124 |
| Tc(PE), °C | 115 | 114 | 111 | 111 |
| Limonene, ppm | 0.8 | 0.7 | 0.6 | >0.1 |
| Talc, wt.-% | 0.9 | 1.0 | 1.1 | 0.9 |
| Chalk, wt.-% | 0.2 | 0.4 | 0.6 | 0.5 |
| * PCR mix = PCR2 / PCR1 1:1 | | | | |

All PCR polyolefin compositions contained more than 0.1 ppm limonene.

*Preparation process:*

Commercially available post-consumer recycled polyolefin compositions supplied by mtm plastics, Germany, comprising propylene an ethylene polymers, as indicated in Table 1 below, were either used directly in the form of cylindrical pellets having a median thickness T50 of 3 mm and a median diameter D50 of 3.5 mm or first subjected to an extrusion step in a Coperion ZSK32 co-rotating twin-screw extruder at 220 °C followed by underwater pelletization in a Nordson-BKG unit with a die plate of 10 holes with 2.8 mm diameter to cylindrical pellets having a median thickness T50 of 1 mm and a median diameter D50 of 3.5 mm.

For all inventive examples, the pellets were mixed with peroxide (POX) as the radical initiator (Trigonox BPIC C75, obtained by Nouryon) in a horizontal mixer with paddle stirrer at a temperature of 65 °C, maintaining an average residence time of about 15 minutes. The mixture (1) was transported by means of the paddles to a vertical reactor, where butadiene was added (< 1 min residence time). This mixture (2) was transferred under inert atmosphere to a Theyson TSK60 co-rotating twin screw extruder having a barrel diameter of 60 mm and an L/D-ratio of 48 equipped with a high intensity mixing screw having three kneading zones and a two-step degassing setup. A melt temperature profile with initial temperature T1 = 240 °C in the feed zone, maximum temperature T2 = 280 °C in the last kneading zone and a final temperature T3 = 230 °C in the die zone, all temperatures being defined as barrel, was selected. The screw speed was set at 300 to 480 rpm depending on MFR. For comparative examples CE1 to CE5, the same process was used, however, without adding butadiene (CE5) or butadiene and POX (CE1 to CE4).

The resulting polymer melt was pelletized in a Gala AW6 underwater pelletizer with a die plate of 24 holes of 2.4 mm diameter.

For comparative examples CE6 and CE7, the PCR polyolefin composition (cylindrical pellets having a median thickness T50 of 3 mm and a median diameter D50 of 3.5 mm) were dry-blended with the peroxide and directly subjected to the extrusion step in a Coperion ZSK18 co-rotating twin-screw extruder using an analogous temperature profile as in the TSK60. The resulting melt was solidified in two strands in a waterbath following by strand pelletization.

All process conditions are summarized in Table 2 (inventive examples) and Table 3 (comparative examples).

**Table 2:** Process conditions - inventive examples.

| Example | IE1 | IE2 | IE3 | IE4 | IE5 | IE6 | IE7 |
|---|---|---|---|---|---|---|---|
| PCR Parameter | PCR1 | PCR1 | PCR mix* | PCR mix* | PCR2 | PCR2 | PCR3 |
| Pellet size, mm | 1 | 1 | 1 | 1 | 1 | 1 | 1 |
| POX, wt.-% | 0.60 | 0.50 | 0.72 | 0.50 | 0.40 | 0.40 | 0.50 |
| Butadiene (BD), wt.-% | 0.24 | 0.11 | 0.24 | 0.20 | 0.30 | 0.23 | 0.20 |
| POX/BD | 2.50 | 4.55 | 3.00 | 2.50 | 1.33 | 1.74 | 2.50 |

(continued)

| Example | IE1 | IE2 | IE3 | IE4 | IE5 | IE6 | IE7 |
|---|---|---|---|---|---|---|---|
| PCR Parameter | PCR1 | PCR1 | PCR mix* | PCR mix* | PCR2 | PCR2 | PCR3 |
| Extruder | TSK60 | TSK60 | TSK60 | TSK60 | TSK60 | TSK60 | TSK60 |
| Throughput, kg/h | 198 | 198 | 198 | 198 | 203 | 203 | 200 |
| Screw speed, rpm | 480 | 480 | 300 | 300 | 300 | 300 | 400 |
| Torque, % | 62 | 56 | 69 | 66 | 60 | 58 | 70 |
| * PCR mix = PCR2 / PCR1 1:1 | | | | | | | |

**Table 3:** Process conditions - comparative examples.

| Example | CE1 | CE2 | CE3 | CE4 | CE5 | CE6 | CE7 |
|---|---|---|---|---|---|---|---|
| PCR Parameter | PCR1 | PCR mix* | PCR2 | PCR3 | PCR3 | PCR3 | PCR3 |
| Pellet size, mm | 3 | 1 | 3 | 1 | 1 | 3 | 3 |
| POX, wt.-% | 0 | 0 | 0 | 0 | 0.64 | 0.23 | 0.90 |
| Butadiene (BD), wt.-% | 0 | 0 | 0 | 0 | 0 | 0 | 0 |
| POX/BD | n.d. | n.d. | n.d. | n.d. | n.d. | n.d. | n.d. |
| Extruder | TSK60 | TSK60 | TSK60 | TSK60 | TSK60 | ZSK18 | ZSK18 |
| Throughput, kg/h | 100 | 100 | 100 | 200 | 100 | 6 | 6 |
| Screw speed, rpm | 400 | 400 | 400 | 400 | 400 | 450 | 450 |
| Torque, % | 71 | 59 | 60 | 69 | 57 | 40 | 34 |
| * PCR mix = PCR2 / PCR1 1:1 | | | | | | | |

The produced modified polyolefin compositions were analyzed for their properties. The results are presented in Table 4 (inventive examples) and Table 5 (comparative examples).

**Table 4:** Parameters of modified polyolefin compositions - inventive examples.

| Example | IE1 | IE2 | IE3 | IE4 | IE5 | IE6 | IE7 |
|---|---|---|---|---|---|---|---|
| PCR Parameter | PCR1 | PCR1 | PCR mix* | PCR mix* | PCR2 | PCR2 | PCR3 |
| $MFR_2$, g/10 min | 0.19 | 0.55 | 0.95 | 1.38 | 5.98 | 9.40 | 20.10 |
| $MFR_2$-ratio | 0.04 | 0.11 | 0.11 | 0.17 | 0.44 | 0.69 | 0.80 |
| XHU, wt.-% | 1.87 | 2.05 | 0.48 | 0.36 | n.d. | 0.19 | 0.29 |
| XHU-ratio | 1.93 | 2.11 | 0.73 | 0.55 | n.d. | 0.37 | 0.48 |
| Tc(PP), °C | 126 | 126 | 128 | 126 | n.d. | 126 | n.d. |
| Tc(PE), °C | 115 | 115 | 113 | 111 | n.d. | 111 | n.d. |
| $\triangle$Tc(PP), °C | 4 | 4 | 4 | 2 | n.d. | 2 | n.d. |
| Mw, kg/mol | n.d. | n.d. | n.d. | n.d. | n.d. | n.d. | 225 |
| Mw/Mn | n.d. | n.d. | n.d. | n.d. | n.d. | n.d. | 10 |
| SHF (180°C, 1 $s^{-1}$) | 4.6 | 2.8 | 7.3 | 7.3 | n.d. | 6.9 | n.d. |
| SHF / $MFR_2$ (g/10 min)$^{-1}$ | 24.2 | 5.1 | 7.7 | 5.3 | n.d. | 0.7 | n.d. |
| $F_{30}$, cN | 11.9 | 7.2 | 9.9 | 8.8 | n.d. | 5.1 | n.d. |

(continued)

| Example | IE1 | IE2 | IE3 | IE4 | IE5 | IE6 | IE7 |
|---|---|---|---|---|---|---|---|
| PCR Parameter | PCR1 | PCR1 | PCR mix* | PCR mix* | PCR2 | PCR2 | PCR3 |
| $v_{30}$, mm/s | 189 | 168 | 206 | 203 | n.d. | 215 | n.d. |
| $F_{30}/MFR_2$, cN(g/10 min)$^{-1}$ | 62.63 | 13.09 | 10.42 | 6.38 | n.d. | 0.54 | n.d. |
| $v_{30}/MFR_2$, mm 600/g | 994.74 | 305.45 | 216.84 | 147.10 | n.d. | 22.87 | n.d. |
| * PCR mix = PCR2 / PCR1 1:1 | | | | | | | |

Table 5: Parameters of modified polyolefin compositions - comparative examples.

| Example | CE1 | CE2 | CE3 | CE4 | CE5 | CE6 | CE7 |
|---|---|---|---|---|---|---|---|
| PCR Parameter | PCR1 | PCR mix* | PCR2 | PCR3 | PCR3 | PCR3 | PCR3 |
| $MFR_2$, g/10 min | 5.0 | 8.3 | 13.7 | 25.1 | 135 | 103 | 223 |
| $MFR_2$-ratio | 1.00 | 1.00 | 1.00 | 1.00 | 5.38 | 4.10 | 8.88 |
| XHU, wt.-% | 0.97 | 0.66 | 0.51 | 0.60 | n.d. | n.d. | n.d. |
| XHU-ratio | 1.00 | 1.00 | 1.00 | 1.00 | n.d. | n.d. | n.d. |
| Tc(PP), °C | 122 | 124 | 124 | 124 | n.d. | n.d. | n.d. |
| Tc(PE), °C | 115 | 114 | 111 | 111 | n.d. | n.d. | n.d. |
| $\Delta$Tc(PP), °C | 0 | 0 | 0 | 0 | n.d. | n.d. | n.d. |
| Mw, kg/mol | 199 | 205 | 211 | 199 | 108 | 124 | 88.4 |
| Mw/Mn | 11.2 | 11.5 | 11.8 | 6.0 | 5.7 | 6.1 | 4.9 |
| SHF (180°C, 1 s$^{-1}$) | 5.5 | 2.2 | 1.5 | 2.2 | n.d. | n.d. | n.d. |
| SHF / $MFR_2$ (g/10 min)$^{-1}$ | 1.10 | 0.27 | 0.11 | 0.09 | n.d. | n.d. | n.d. |
| F30, cN | 8.3 | 3.3 | 1.2 | n.d. | n.d. | n.d. | n.d. |
| v30, mm/s | 179 | 211 | 163 | n.d. | n.d. | n.d. | n.d. |
| $F_{30}/MFR_2$, cN(g/10 min)$^{-1}$ | 1.66 | 0.40 | 0.09 | n.d. | n.d. | n.d. | n.d. |
| $v_{30}/MFR_2$, mm 600/g | 35.80 | 25.42 | 11.90 | n.d. | n.d. | n.d. | n.d. |
| * PCR mix = PCR2 / PCR1 1:1 | | | | | | | |

The results indicate that the melt flow rate $MFR_2$ (2.16 kg load, 230 °C) was significantly reduced in the polyolefin composition by the process of the present invention. In contrast, the addition of only peroxide enhanced the $MFR_2$ (CE5 to CE7). As was expected, in the absence of both components the $MFR_2$ remained unchanged (CE1 to CE4).

Further, strain hardening by long chain branching was reached by the inventive process. In particular in polyolefin compositions with higher propylene polymer content, this is indicated by the SHF parameter for examples IE3, IE4 and IE6 vs. comparative examples CE2 to CE4. Under consideration of the $MFR_2$, strain hardening can be seen for IE1 and IE2 as well (SHF/$MFR_2$ parameter).

Enhancement of $F_{30}$ melt strength and $v_{30}$ melt extensibility can be observed for the inventive examples as well, either directly or by consideration of the respective $MFR_2$.

Further, for the propylene polymer content in the polyolefin composition, the crystallization temperature was increased by the inventive process.

**Claims**

1. A process for modifying a post-consumer recycled polyolefin composition comprising the steps of

(A) providing a post-consumer recycled polyolefin composition having a starting melt flow rate $MFR_2$ (1), determined according to ISO 1133 at 2.16 kg load, 230 °C, in the range of from 1.0 to 100 g/10 min, and comprising, based on the total weight of the post-consumer recycled polyolefin composition, determined by FTIR spectroscopy,

(a) at least 50 wt.-% of one or more propylene (co)polymer component(s) and
(b) up to 50 wt.-% of one or more ethylene (co)polymer component(s);

(B) adding 0.10 to 1.50 wt.-%, based on the total weight of the post-consumer recycled polyolefin composition, of a radical initiator to the post-consumer recycled polyolefin composition and optionally mixing the components to form a mixture (1);
(C) adding 0.05 to 0.50 wt.-%, based on the total weight of the post-consumer recycled polyolefin composition, of a twofold unsaturated hydrocarbon compound having the general formula (1)

$$(1) \qquad CH_2=CH\text{-}(R)\text{-}CH=CH_2,$$

wherein R may be present or absent, and if being present, R is an aliphatic or aromatic hydrocarbon group comprising from 1 to 6 carbon atoms,
and mixing the components to form a mixture (2); and

(D) extruding the mixture (2) at a temperature in the range of from 180 to 300 °C to obtain a modified polyolefin composition having a final melt flow rate $MFR_2$ (2), determined according to ISO 1133 at 2.16 kg load, 230 °C;

wherein the ratio of $MFR_2$ (2) : $MFR_2$ (1) is below 1.00.

2. The process according to claim 1, wherein the one or more propylene (copolymer component(s) comprise(s) a propylene homopolymer, preferably an isotactic propylene homopolymer, and/or an isotactic copolymer of propylene and comonomer(s) selected from ethylene and/or one or more alpha-olefin(s) having from 4 to 10 carbon atoms, wherein the copolymer preferably contains, determined by quantitative $^{13}C\{^1H\}$-NMR spectroscopy, from 0.1 to 27 mol-% of comonomer(s).

3. The process according to any one of the preceding claims, wherein the one or more ethylene (co)polymer component(s) comprise(s) an ethylene homopolymer and/or a copolymer of ethylene and comonomer(s) selected from one or more alpha-olefin(s) having from 3 to 10 carbon atoms, wherein the copolymer preferably contains, determined by quantitative $^{13}C\{^1H\}$-NMR spectroscopy, from 0.1 to 20 mol-% of comonomer(s), and wherein the ethylene homopolymer and/or the copolymer preferably has a degree of crystallinity, determined according to differential scanning calorimetry (DSC) and assuming a melting enthalpy of 293 J/g for fully crystalline polyethylene, in the range of from 40 to 90 %.

4. The process according to any one of the preceding claims, wherein the post-consumer recycled polyolefin composition comprises, based on the total weight of the post-consumer recycled polyolefin composition, determined by FTIR spectroscopy,

(a) from 50 to 98 wt.-% of one or more propylene (co)polymer component(s) and
(b) from 2 to 50 wt.-% of one or more ethylene (co)polymer component(s).

5. The process according to any one of the preceding claims, wherein step (B) and/or step (C) is/are performed at a temperature in the range of from 20 to 90 °C.

6. The process according to any one of the preceding claims, wherein the twofold unsaturated hydrocarbon compound is 1,3-butadiene and/or the radical initiator is a peroxy compound, preferably selected from the group consisting of acyl peroxide, alkyl peroxide, hydroperoxide, perester, peroxycarbonate, and combinations thereof.

7. The process according to any one of the preceding claims, wherein the post-consumer recycled polyolefin composition further comprises, based on the total weight of the post-consumer recycled polyolefin composition, one or more of

(c) from 0.1 to 100 ppm, preferably from 0.1 to 50 ppm, more preferably from 0.1 to 20 ppm, most preferably from 0.1 to 5 ppm, of limonene, determined by solid phase microextraction (HS-SPME-GC-MS);
(d) from 0.1 to 100 ppm of fatty acids, determined by solid phase microextraction (HS-SPME-GC-MS);
(e) from 0.1 to 10 wt.-% of non-polyolefin polymers, determined by FTIR spectroscopy;
(f) from 0.1 to 10 wt.-% of other components, selected from talc, chalk, carbon, calcium stearate, titanium dioxide, pigments, metals, glass, paper, wood and combinations thereof, determined as described in the specification.

8. The process according to any one of the preceding claims, wherein the post-consumer recycled polyolefin composition comprises a crystalline fraction (CF), determined according to CRYSTEX QC method, ISO 6427 Annex B, in an amount in the range of from 75 to 98 wt.-%, based on the total weight of the post-consumer recycled polyolefin composition.

9. The process according to any one of the preceding claims, wherein the post-consumer recycled polyolefin composition comprises an ethylene content of the crystalline fraction (C2(CF)), determined according to FTIR during CRYSTEX analysis, in an amount in the range of from 3 to 60 wt.-%, based on the total weight of the crystalline fraction of the post-consumer recycled polyolefin composition.

10. The process according to any one of the preceding claims, wherein the post-consumer recycled polyolefin composition is present in pellet form having a median thickness T50, determined by direct caliper measurement, in the range of from 0.5 to 5.0 mm.

11. The process according to any one of the preceding claims, wherein the process is **characterized by** providing at least one of the following properties:

(1) a ratio of the amount of the xylene hot insoluble (XHU) fraction of the modified polyolefin composition to the amount of the xylene hot insoluble (XHU) fraction of the post-consumer recycled polyolefin composition, determined according to EN 579, of below 2.5; and
(2) the ratio of $MFR_2$ (2) : $MFR_2$ (1) in the range of from 0.01 to 0.95.

12. A modified polyolefin composition obtained by the process according to any one of the preceding claims.

13. The modified polyolefin composition according to claim 12, wherein the modified polyolefin composition is **characterized by** at least one of the following properties:

(1) an $F_{30}$ melt strength, determined according to Rheotens method, ISO 16790:2005, in the range of from 3.5 to 30.0 cN;
(2) a $v_{30}$ melt extensibility, determined according to Rheotens method, ISO 16790:2005, in the range of from 150 to 300 mm/s;
(3) a xylene hot insoluble (XHU) fraction, determined according to EN 579, in an amount in the range of from 0.0 to 3.5 wt.-%, based on the total weight of the modified polyolefin composition;
(4) a second melt flow rate $MFR_2$ (2), determined according to ISO 1133 at 2.16 kg load, 230 °C, in the range of from 0.1 to 50.0 g/10 min;
(5) a molecular weight ratio Mw/Mn, determined by the GPC method according to ISO 16014-4:2003 and ASTM D 6474-99, in the range of from 5 to 15; and
(6) a strain hardening factor (SHF), determined at a strain rate of 1 $s^{-1}$ and a Hencky strain of 2.5 and 180 °C as described in the specification, in the range of from 2.0 to 20.0.

14. Use of the modified polyolefin composition according to any one of the claims 12 and 13 in the manufacture of an article, preferably a foamed article, a film or an extrusion coating.

15. An article comprising the modified polyolefin composition according to any one of the claims 12 and 13, wherein the article is preferably a foamed article, a film or an extrusion coating, and comprises more than 50 wt.-% of the modified polyolefin composition, based on the total weight of the article.

**Patentansprüche**

1. Verfahren zum Modifizieren einer Post-Consumer-recycelten Polyolefin-Zusammensetzung, das die folgenden Schritte umfasst:

(A) Vorsehen einer Post-Consumer-recycelten Polyolefin-Zusammensetzung, die eine anfängliche Schmelz-flussrate ($MFR_2$) (1), bestimmt gemäß ISO 1133 bei einer Last von 2,16 kg und einer Temperatur von 230 °C, im Bereich von 1,0 bis 100 g/10 min, aufweist und basierend auf dem Gesamtgewicht der Post-Consumer-recycelten Polyolefin-Zusammensetzung, bestimmt gemäß einer FTIR-Spektroskopie, umfasst:

(a) wenigstens 50 Gew.-% einer oder mehrerer Propylen-(Co)polymer-Komponenten, und
(b) bis zu 50 Gew.-% einer oder mehrerer Ethylen-(Co)polymer-Komponenten,

(B) Hinzufügen von 0,10 bis 1,50 Gew.-%, basierend auf dem Gesamtgewicht der Post-Consumer-recycelten Polyolefin-Zusammensetzung, eines Radikalinitiators zu der Post-Consumer-recycelten Polyolefin-Zusammensetzung, und optionales Mischen der Komponenten für das Bilden einer Mischung (1),
(C) Hinzufügen von 0,05 bis 0,50 Gew.-%, basierend auf dem Gesamtgewicht der Post-Consumer-recycelten Polyolefin-Zusammensetzung, einer zweifach ungesättigten Kohlenwasserstoffverbindung mit der allgemeinen Formel (1):

$$(1) \qquad CH_2=CH-(R)-CH=CH_2$$

wobei R vorhanden sein kann oder nicht, wobei R, falls es vorhanden ist, eine aliphatische oder aromatische Kohlenwasserstoffgruppe mit 1 bis 6 Kohlenstoffatomen ist, und
Mischen der Komponenten für das Bilden einer Mischung (2), und

(D) Extrudieren der Mischung (2) bei einer Temperatur im Bereich von 180 bis 300 °C, um eine modifizierte Polyolefin-Zusammensetzung mit einer endgültigen Schmelzflussrate ($MFR_2$) (2), bestimmt gemäß ISO 1133 bei einer Last von 2,16 kg und einer Temperatur von 230 °C, zu erhalten,

wobei das Verhältnis $MFR_2$ (2) : $MFR_2$ (1) weniger als 1,00 beträgt.

2. Verfahren nach Anspruch 1, wobei das eine oder die mehreren Propylen-(Co)polymerKomponenten ein Propylen-Homopolymer, vorzugsweise ein isotaktisches Propylen-Homopolymer, und/oder ein isotaktisches Copolymer von Propylen und einem oder mehreren Comonomeren, die aus Ethylen und/oder einem oder mehreren alpha-Olefinen mit 4 bis 10 Kohlenstoffatomen ausgewählt sind, umfasst, wobei das Copolymer vorzugsweise, bestimmt durch eine quantitative $^{13}C\{^1H\}$-NMR-Spektroskopie, von 0,1 bis 27 mol-% eines oder mehrerer Comonomere enthält.

3. Verfahren nach einem der vorstehenden Ansprüche, wobei die eine oder die mehreren Ethylen-(Co)polymer-Komponenten ein Ethylen-Homopolymer und/oder ein Copolymer von Ethylen und einem oder mehreren Comonomeren, die aus einem oder mehreren alpha-Olefinen mit zwischen 3 und 10 Kohlenstoffatomen ausgewählt sind, umfassen, wobei das Copolymer vorzugsweise, bestimmt durch eine quantitative $^{13}C\{^1H\}$-NMR-Spektroskopie, von 0,1 bis 20 mol-% eines oder mehrerer Comonomere enthält, und wobei das Ethylen-Homopolymer und/oder das Copolymer vorzugsweise einen Kristallinitätsgrad, bestimmt gemäß einer dynamischen Differenzkalorimetrie (DSC) und bei einer Schmelzenthalpie von 293 J/g für ein vollkristallines Polyethylen, im Bereich von 40 bis 90 % aufweist.

4. Verfahren nach einem der vorstehenden Ansprüche, wobei die Post-Consumer-recycelte Polyolefin-Zusammensetzung, basierend auf dem Gesamtgewicht der Post-Consumer-recycelten Polyolefin-Zusammensetzung, bestimmt durch eine FTIR-Spektroskopie, umfasst:

(a) zwischen 50 und 98 Gew.-% einer oder mehrerer Propylen-(Co)polymer-Komponenten, und
(b) zwischen 2 und 50 Gew.-% einer oder mehrerer Ethylen-(Co)polymer-Komponenten.

5. Verfahren nach einem der vorstehenden Ansprüche, wobei der Schritt (B) und/oder der Schritt (C) bei einer Temperatur im Bereich von 20 bis 90 °C durchgeführt werden.

6. Verfahren nach einem der vorstehenden Ansprüche, wobei die zweifach ungesättigte Kohlenwasserstoffverbindung ein 1,3-Butadien ist und/oder der Radikalinitiator eine Peroxyverbindung ist, die vorzugsweise aus der Gruppe ausgewählt ist, die aus Acylperoxid, Alkylperoxid, Hydroperoxid, Perester, Peroxycarbonat und Kombinationen aus diesen besteht.

7. Verfahren nach einem der vorstehenden Ansprüche, wobei die Post-Consumer-recycelte Polyolefin-Zusammensetzung weiterhin, basierend auf dem Gesamtgewicht der Post-Consumer-recycelten Polyolefin-Zusammensetzung, eines oder mehrere der Folgenden umfasst:

(c) zwischen 0,1 und 100 ppm, vorzugsweise 0,1 bis 50 ppm, besser zwischen 0,1 und 20 ppm und am besten zwischen 0,1 und 5 ppm Limonen, bestimmt durch eine Festphasenmikroextraktion (HS-SPME-GC-MS),
(d) zwischen 0,1 und 100 ppm Fettsäuren, bestimmt gemäß einer Festphasenmikroextraktion (HS-SPME-GC-MS),
(e) zwischen 0,1 und 10 Gew.-% nicht-Polyolefin-Polymere, bestimmt durch eine FTIR-Spektroskopie,
(f) zwischen 0,1 und 10 Gew.-% anderer Komponenten, die aus Talk, Kreide, Kohlenstoff, Calciumstearat, Titandioxid, Pigmenten, Metallen, Glas, Papier, Holz und Kombinationen aus diesen ausgewählt sind, bestimmt wie in der Beschreibung beschrieben.

8. Verfahren gemäß einem der vorstehenden Ansprüche, wobei die Post-Consumer-recycelte Polyolefin-Zusammensetzung eine kristalline Fraktion (CF), bestimmt gemäß der CRYSTEX-QC-Methode, ISO 6427 Anhang B, mit einem Anteil im Bereich von 75 bis 98 Gew.-%, basierend auf dem Gesamtgewicht der Post-Consumer-recycelten Polyolefin-Zusammensetzung umfasst.

9. Verfahren gemäß einem der vorstehenden Ansprüche, wobei die Post-Consumer-recycelte Polyolefin-Zusammensetzung einen Ethylen-Anteil der kristallinen Fraktion (C2(CF)), bestimmt gemäß FTIR während einer CRYSTEX-Analyse, mit einem Anteil im Bereich von 3 bis 60 Gew.-% basierend auf dem Gesamtgewicht der kristallinen Fraktion der Post-Consumer-recycelten Polyolefin-Zusammensetzung umfasst.

10. Verfahren nach einem der vorstehenden Ansprüche, wobei die Post-Consumer-recycelte Polyolefin-Zusammensetzung in einer Pelletform mit einer mittleren Dicke T50, bestimmt durch eine direkte Dickenmessung, im Bereich von 0,5 bis 5,0 mm aufweist.

11. Verfahren nach einem der vorstehenden Ansprüche, wobei das Verfahren **dadurch gekennzeichnet ist, dass** es wenigstens eine der folgenden Eigenschaften vorsieht:

(1) ein Verhältnis zwischen der Menge der in heißem Xylol unlöslichen (XHU) Fraktion der modifizierten Polyolefin-Zusammensetzung und der Menge der in heißem Xylol unlöslichen (XHU) Fraktion der Post-Consumer-recycelten Polyolefin-Zusammensetzung, bestimmt gemäß EN 579, von weniger als 2,5, und
(2) das Verhältnis $MFR_2$ (2) : $MFR_2$ (1) im Bereich von 0,01 bis 0,95.

12. Modifizierte Polyolefin-Zusammensetzung, die durch das Verfahren gemäß einem der vorstehenden Ansprüche erhalten wird.

13. Modifizierte Polyolefin-Zusammensetzung nach Anspruch 12, wobei die modifizierte Polyolefin-Zusammensetzung durch wenigstens eine der folgenden Eigenschaften gekennzeichnet ist:

(1) eine $F_{30}$-Schmelzfestigkeit, bestimmt gemäß der Rheotens-Methode, ISO 16790:2005, im Bereich von 3,5 bis 30,0 cN,
(2) eine $V_{30}$-Schmelzdehnfähigkeit, bestimmt gemäß der Rheotens-Methode, ISO 16790:2005, im Bereich von 150 bis 300 mm/s,
(3) eine in heißem Xylol unlösliche Fraktion, bestimmt gemäß EN 579, mit einem Anteil im Bereich von 0,0 bis 3,5 Gew.-%, basierend auf dem Gesamtgewicht der modifizierten Polyolefin-Zusammensetzung,
(4) eine zweite Schmelzflussrate $MFR_2$ (2), bestimmt gemäß ISO 1133 bei einer Last von 2,16 kg und einer Temperatur von 230 °C, im Bereich von 0,1 bis 50,0 g/10 min,
(5) ein Molekulargewichtverhältnis Mw/Mn, bestimmt durch die GPC-Methode gemäß ISO 16014-4:2003 und ASTM D 6474-99, im Bereich von 5 bis 15, und
(6) einen Verfestigungsfaktor (SHF), bestimmt bei einer Dehnungsrate von 1 $s^{-1}$, einer Hencky-Dehnung von 2,5 und einer Temperatur von 180 °C wie in der Beschreibung beschrieben, im Bereich von 2,0 bis 20,0.

**14.** Verwenden der modifizierten Polyolefin-Zusammensetzung gemäß Anspruch 12 oder 13 bei der Herstellung eines Artikels, vorzugsweise eines geschäumten Artikels, einer Folie oder einer Extrusionsbeschichtung.

**15.** Artikel, der die modifizierte Polyolefin-Zusammensetzung gemäß Anspruch 12 oder 13 umfasst, wobei der Artikel vorzugsweise ein geschäumter Artikel, eine Folie oder eine Extrusionsbeschichtung ist und mehr als 50 Gew.-% der modifizierten Polyolefin-Zusammensetzung basierend auf dem Gesamtgewicht des Artikels umfasst.

**Revendications**

**1.** Procédé de modification d'une composition de polyoléfine recyclée après consommation, comprenant les étapes suivantes :

(A) la fourniture d'une composition de polyoléfine recyclée après consommation ayant un indice de fluidité à l'état fondu initial MFR2 (1), déterminé selon la norme ISO 1133 à 2,16 kg de charge, 230 °C, dans la plage allant de 1,0 à 100 g/10 min, et comprenant, sur la base du poids total de la composition de polyoléfine recyclée après consommation, déterminé par spectroscopie FTIR,

(a) au moins 50 % en poids d'un ou de plusieurs composant(s) (co)polymère(s) de propylène et
(b) jusqu'à 50 % en poids d'un ou plusieurs composant(s) (co)polymère(s) d'éthylène ;

(B) l'ajout de 0,10 à 1,50 % en poids, par rapport au poids total de la composition de polyoléfine recyclée après consommation, d'un initiateur radicalaire à la composition de polyoléfine recyclée après consommation et éventuellement le mélange des composants pour former un mélange (1) ;
(C) l'ajout de 0,05 à 0,50 % en poids, par rapport au poids total de la composition de polyoléfine recyclée après consommation, d'un composé hydrocarboné doublement insaturé ayant la formule générale (1)

$$(1) \qquad CH2=CH\text{-}(R)\text{-}C=CH_2,$$

où R peut être présent ou absent, et s'il est présent, R est un groupe hydrocarboné aliphatique ou aromatique comprenant de 1 à 6 atomes de carbone, et le mélange des composants pour former un mélange (2) ; et
(D) l'extrusion du mélange (2) à une température dans la plage allant de 180 à 300 °C pour obtenir une composition de polyoléfine modifiée ayant un indice de fluidité à l'état fondu final MFR2 (2), déterminé selon la norme ISO 1133 à une charge de 2,16 kg, 230 °C ;

le rapport MFR2 (2): MFR2 (1) étant inférieur à 1,00.

**2.** Procédé selon la revendication 1, dans lequel le ou les composant(s) (co)polymère(s) de propylène comprend/comprennent un homopolymère de propylène, de préférence un homopolymère de propylène isotactique, et/ou un copolymère isotactique de propylène et de comonomère(s) choisi(s) parmi l'éthylène et/ou une ou plusieurs alpha-oléfine(s) ayant de 4 à 10 atomes de carbone, le copolymère contenant de préférence, déterminé par spectroscopie RMN $^{13}$C{$^{1}$H} quantitative, de 0,1 à 27 % en moles de comonomère(s).

**3.** Procédé selon l'une quelconque des revendications précédentes, dans lequel le ou les composant(s) (co)polymère(s) d'éthylène comprend/comprennent un homopolymère d'éthylène et/ou un copolymère d'éthylène et de comonomère(s) choisi(s) parmi une ou plusieurs alpha-oléfine(s) ayant de 3 à 10 atomes de carbone, le copolymère contenant de préférence, déterminé par spectroscopie RMN $^{13}$C{$^{1}$H} quantitative, de 0,1 à 20 % en moles de comonomère(s), et l'homopolymère d'éthylène et/ou le copolymère ayant de préférence un degré de cristallinité, déterminé par calorimétrie différentielle à balayage (DSC) et en supposant une enthalpie de fusion de 293 J/g pour le polyéthylène entièrement cristallin, dans la plage allant de 40 à 90 %.

**4.** Procédé selon l'une quelconque des revendications précédentes, dans lequel la composition de polyoléfine recyclée après consommation comprend, sur la base du poids total de la composition de polyoléfine recyclée après consommation, déterminé par spectroscopie FTIR,

(a) de 50 à 98 % en poids d'un ou de plusieurs composant(s) (co)polymère(s) de propylène et
(b) de 2 à 50 % en poids d'un ou plusieurs composant(s) (co)polymère(s) d'éthylène.

5. Procédé selon l'une quelconque des revendications précédentes, dans lequel l'étape (B) et/ou l'étape (C) est/sont réalisée(s) à une température dans la plage allant de 20 à 90 °C.

6. Procédé selon l'une quelconque des revendications précédentes, dans lequel le composé hydrocarboné doublement insaturé est le 1,3-butadiène et/ou l'initiateur radicalaire est un composé peroxy, de préférence choisi dans le groupe constitué par un peroxyde d'acyle, un peroxyde d'alkyle, un hydroperoxyde, un perester, un peroxycarbonate, et leurs combinaisons.

7. Procédé selon l'une quelconque des revendications précédentes, dans lequel la composition de polyoléfine recyclée après consommation comprend en outre, sur la base du poids total de la composition de polyoléfine recyclée après consommation, un ou plusieurs des éléments suivants

(c) de 0,1 à 100 ppm, de préférence de 0,1 à 50 ppm, de manière davantage préférée de 0,1 à 20 ppm, de manière préférée entre toutes de 0,1 à 5 ppm, de limonène, déterminé par microextraction en phase solide (HS-SPME-GC-MS) ;
(d) de 0,1 à 100 ppm d'acides gras, déterminés par microextraction en phase solide (HS-SPME-GC-MS) ;
(e) de 0,1 à 10 % en poids de polymères non polyoléfiniques, déterminés par spectroscopie FTIR ;
(f) de 0,1 à 10 % en poids d'autres composants, choisis parmi le talc, la craie, le carbone, le stéarate de calcium, le dioxyde de titane, les pigments, les métaux, le verre, le papier, le bois et leurs combinaisons, déterminés comme décrit dans la description.

8. Procédé selon l'une quelconque des revendications précédentes, dans lequel la composition de polyoléfine recyclée après consommation comprend une fraction cristalline (CF), déterminée selon le procédé CRYSTEX QC, ISO 6427 Annexe B, en une quantité dans la plage allant de 75 à 98 % en poids, par rapport au poids total de la composition de polyoléfine recyclée après consommation.

9. Procédé selon l'une quelconque des revendications précédentes, dans lequel la composition de polyoléfine recyclée après consommation comprend une teneur en éthylène de la fraction cristalline (C2(CF)), déterminée selon FTIR lors de l'analyse CRYSTEX, en une quantité dans la plage allant de 3 à 60 % en poids, sur la base du poids total de la fraction cristalline de la composition de polyoléfine recyclée après consommation.

10. Procédé selon l'une quelconque des revendications précédentes, dans lequel la composition de polyoléfine recyclée après consommation est présente sous forme de granulés ayant une épaisseur médiane T50, déterminée par mesure directe au pied à coulisse, dans la plage allant de 0,5 à 5,0 mm.

11. Procédé selon l'une quelconque des revendications précédentes, dans lequel le procédé est **caractérisé par** la fourniture d'au moins l'une des propriétés suivantes :

(1) un rapport entre la quantité de la fraction insoluble à chaud dans le xylène (XHU) de la composition de polyoléfine modifiée et la quantité de la fraction insoluble à chaud dans le xylène (XHU) de la composition de polyoléfine recyclée après consommation, déterminé conformément à la norme EN 579, inférieur à 2,5 ; et
(2) le rapport de MFR2 (2): MFR2 (1) dans la plage allant de 0,01 à 0,95.

12. Composition de polyoléfine modifiée obtenue par le procédé selon l'une quelconque des revendications précédentes.

13. Composition de polyoléfine modifiée selon la revendication 12, dans laquelle la composition de polyoléfine modifiée est **caractérisée par** au moins une des propriétés suivantes :

(1) une résistance à l'état fondu F30, déterminée selon le procédé Rheotens, ISO 16790:2005, dans la plage allant de 3,5 à 30,0 cN ;
(2) une extensibilité à l'état fondu V30, déterminée selon le procédé Rheotens, ISO 16790:2005, dans la plage allant de 150 à 300 mm/s ;
(3) une fraction insoluble à chaud dans le xylène (XHU), déterminée selon la norme EN 579, en une quantité dans la plage allant de 0,0 à 3,5 % en poids, sur la base du poids total de la composition de polyoléfine modifiée ;
(4) un deuxième indice de fluidité à l'état fondu MFR2 (2), déterminé selon la norme ISO 1133 à une charge de 2,16 kg, 230 °C, dans la plage allant de 0,1 à 50,0 g/10 min ;
(5) un rapport de poids moléculaire Mw/Mn, déterminé par le procédé GPC conformément à la norme ISO 16014-4:2003 et à la norme ASTM D 6474-99, dans la plage allant de 5 à 15 ; et

(6) un facteur d'écrouissage (SHF), déterminé à une vitesse de déformation de 1 s$^{-1}$ et à une déformation de Hencky de 2,5 et à 180 °C comme décrit dans la description, dans la plage allant de 2,0 à 20,0.

14. Utilisation de la composition de polyoléfine modifiée selon l'une quelconque des revendications 12 et 13 dans la fabrication d'un article, de préférence d'un article expansé, d'un film ou d'un revêtement par extrusion.

15. Article comprenant la composition de polyoléfine modifiée selon l'une quelconque des revendications 12 et 13, dans lequel l'article est de préférence un article expansé, un film ou un revêtement par extrusion, et comprend plus de 50 % en poids de la composition de polyoléfine modifiée, par rapport au poids total de l'article.

Figure 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3757152 A1

**Non-patent literature cited in the description**

- **M. H. WAGNER.** Rheotens-Master-curves and Drawability of Polymer Melts. *Polymer Engineering and Science,* vol. 36, 925-935
- **BAUMGÄRTEL M ; WINTER HH.** Determination of the discrete relaxation and retardation time spectra from dynamic mechanical data. *Rheol.Acta,* 1989, vol. 28, 511519
- **BUSICO, V ; CIPULLO, R.** *Prog. Polym. Sci.,* 2001, vol. 26, 443
- **BUSICO, V ; CIPULLO, R ; MONACO, G. ; VACATELLO, M. ; SEGRE, A.L.** *Macromolecules,* 1997, vol. 30, 6251
- **ZHOU, Z ; KUEMMERLE, R. ; QIU, X ; REDWINE, D ; CONG, R. ; TAHA, A ; BAUGH, D. WINNIFORD, B.** *J. Mag. Reson.,* 2007, vol. 187, 225
- **BUSICO, V ; CARBONNIERE, P. ; CIPULLO, R. ; PELLECCHIA, R ; SEVERN, J. ; TALARICO, G.** *Macromol. Rapid Commun,* 2007, vol. 28, 11289

- **RESCONI, L ; CAVALLO, L. ; FAIT, A. ; PIEMONTESI, F.** *Chem. Rev.,* 2000, vol. 100, 1253
- **WANG, W-J ; ZHU, S.** *Macromolecules,* 2000, vol. 33, 1157
- **CHENG, H. N.** *Macromolecules,* 1984, vol. 17, 1950
- **BUSICO, V ; CIPULLO, R ; MONACO, G. ; VACATELLO, M ; SEGRE, A.L.** *Macromolecules,* 1997, vol. 30, 6251
- **WANG, W-J. ; ZHU, S.** *Macromolecules,* 2000, vol. 33, 1157
- **LJILJANA JEREMIC ; ANDREAS ALBRECHT ; MARTINA SANDHOLZER ; MARKUS GAHLEITNER.** Rapid characterization of high-impact ethylene-propylene copolymer composition by crystallization extraction separation: comparability to standard separation methods. *International Journal of Polymer Analysis and Characterization,* 2020, vol. 25 (8), 581-596
- Polymer Handbook. Wiley, 1989